# EUROPÄISCHE PATENTSCHRIFT

(11) **EP 2 225 536 B1**
(45) Veröffentlichungstag und Bekanntmachung des Hinweises auf die Patenterteilung: **11.01.2017**
(21) Anmeldenummer: 08866465.1
(22) Anmeldetag: 11.11.2008
(51) Int. Cl.: G01C 19/5783

(54) **SENSORANORDNUNG UND VERFAHREN ZUR HERSTELLUNG EINER SENSORANORDNUNG**
SENSOR ARRANGEMENT AND METHOD FOR PRODUCING A SENSOR ARRANGEMENT
SYSTÈME DE DÉTECTION ET PROCÉDÉ DE FABRICATION D'UN SYSTÈME DE DÉTECTION

(30) Priorität: 27.12.2007 DE 102007062700
(43) Veröffentlichungstag der Anmeldung: 08.09.2010
(73) Patentinhaber: Robert Bosch GmbH, 70442 Stuttgart (DE)
(72) Erfinder: JOCHAM, Reinhold, 72379 Hechingen (DE); KURLE, Juergen, 72766 Reutlingen (DE); SCHMICH, Franz, 72793 Pfullingen (DE)
(86) Internationale Anmeldenummer: PCT/EP2008/065321
(87) Internationale Veröffentlichungsnummer: WO 2009/083322

(56) Entgegenhaltungen:
- WO-A-2005/057998
- DE-A1- 10 352 002
- US-A1- 2008 041 158

## Beschreibung

### Stand der Technik

Die Erfindung geht aus von einer Sensoranordnung nach dem Oberbegriff des Anspruchs 1.

Solche Sensoranordnungen sind allgemein bekannt. Beispielsweise ist aus der Druckschrift DE 10 2006 002 350 A1 eine Inertialsensoranordnung mit einem auf einem Träger angebrachten Sensormodul, das einen mikromechanisch hergestellten Inertialsensor und eine Auswerteschaltung umfasst, bekannt, wobei das Sensormodul durch ein elastisches Koppelelement mit dem Träger verbunden ist.

Aus der Druckschrift WO 2005 / 057 998 A1 ist bekannt, ein Funktionsmodul in einem Modulhalterahmen formschlüssig zu verrasten, wobei der Modulhalterahmen in ein Gehäuse geklebt wird. Die Druckschrift DE 103 52 002 A1 offenbart ein Sensormodul, welches ein Gehäuse und eine in das Gehäuse geklebte Sensoranordnung aufweist.

### Offenbarung der Erfindung

Die erfindungsgemäße Sensoranordnung und das erfindungsgemäße Verfahren zur Herstellung einer Sensoranordnung gemäß den nebengeordneten Ansprüche, haben gegenüber dem Stand der Technik den Vorteil, dass das Sensormodul an der am Halterahmen und somit auch an der Grundplatte über eine erheblich belastbarere und langlebigere mechanische Verbindung fixiert ist und gleichzeitig der Herstellungsprozess deutlich kostenreduziert ist. Weiterhin weist die erfindungsgemäße Sensoranordnung im Vergleich zum Stand der Technik eine erheblich geringere Bautiefe auf, so dass insbesondere im Hinblick auf eine Verwendung der Sensoranordnung im Fahrzeugbau eine deutliche einfachere, vielseitigere und kostengünstigere Implementierung der Sensoranordnung ermöglicht wird. Das Sensormodul ist gegenüber einer Kraftwirkung in der Haupterstreckungsebene formschlüssig und gegenüber einer Kraftwirkung senkrecht zur Haupterstreckungsebene kraftschlüssig fixiert, so dass das Sensormodul auch gegenüber vergleichsweise großen Kraftwirkungen an der Grundplatte bzw. am Halterahmen mechanisch sicher befestigt ist. Insbesondere bei der Verwendung von Sensormodulen, welche metallische Standardgehäuse umfassen, ist die Erzielung einer ausreichenden mechanischen Stabilität in der Aussparung bzw. im Halterahmen aufgrund einer stoffschlüssigen Verbindung nicht möglich. Ferner erfordert eine stoffschlüssige Verbindung einen zusätzlichen Herstellungsschritt bei der Herstellung einer Sensoranordnung, so dass eine mechanische Fixierung des Sensormoduls allein aufgrund eines Form- und Kraftschlusses erhebliche Kostenvorteile bei der Herstellung der Sensoranordnung verursacht. Insbesondere ist zur Herstellung der stoffschlüssigen Verbindung ferner ein vergleichsweise zeitintensives und somit kostenverursachendes Aushärten des Klebstoffs o.ä. notwendig. Besonders im Hinblick auf beschichtete Sensormodule, welche beispielsweise eine Nickelschicht aufweisen, ist aufgrund einer mit der Zeit fortschreitenden Oxidation der Schicht eine kurze Herstellungszeit erforderlich. Ferner wird durch den Einpressvorgang eine Temperaturerhöhung der Sensoranordnung zur Beschleunigung der Aushärtezeit, welche sich besonders nachteilig auf das Sensormodul bzw. den Sensor auswirkt, eingespart. Die erfindungsgemäße Sensoranordnung kombiniert weiterhin die genannten Vorteile einer kraftschlüssigen Fixierung des Sensormoduls mit den Vorteilen einer schwingungsentkoppelten Befestigung des Sensormoduls an der Grundplatte, da Störschwingungen der Grundplatte durch das Dämpfungselement stark gedämpft werden und daher der Einfluss der Störschwingungen auf das Sensormodul minimiert wird. Zur maximalen Entkopplung des Sensormoduls von der Grundplatte ist eine derartige Ausbildung des Dämpfungselements, des Halterahmens und/oder der Aussparung vorgesehen, dass eine Resonanzfrequenz des Sensormoduls zusammen mit dem Halterahmen weit außerhalb einer kritischen Frequenz des Sensormoduls liegt, wobei die kritische Frequenz insbesondere durch eine Schwingungs- und/oder Resonanzfrequenz einer Coriolis-Masse eines Drehratensensor bestimmt wird. Der Halterahmen ist zusammen mit dem Sensormodul durch das Dämpfungselement, welches ein elastisches Element umfasst, in der Aussparung kraftschlüssig gegenüber einer Bewegung senkrecht zur Haupterstreckungsrichtung und formschlüssig gegenüber eine Bewegung in der Haupterstreckungsrichtung eingeklemmt.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Weiterbildung ist vorgesehen, dass das Sensormodul wenigstens einen Anschlusspin aufweist, welcher außerhalb des Sensormoduls eine Anschlussfläche aufweist, die im Wesentlichen parallel zur Haupterstreckungsebene ausgebildet ist. Besonders vorteilhaft wird aufgrund dieser ausgebildeten Anschlussfläche des Anschlusspins ein Bondprozess unmittelbar auf die Anschlussfläche ermöglicht, so dass in besonders einfacher Weise das Sensormodul über den Anschlusspin elektrisch leitfähig kontaktierbar ist. Begünstigt wird ein derartiger Bondprozess durch die vergleichsweise geringe Bautiefe der Sensoranordnung, da zwischen der Grundplatte und dem Sensormodul somit eine geringere Höhendifferenz senkrecht zur Haupterstreckungsebene ausgebildet ist. Insbesondere sind elektrische, elektronische und/oder mikromechanische Bauelemente und vorzugsweise ein Drehratensensor im Innern des Sensormoduls über den Anschlusspin elektrisch leitfähig kontaktiert.

Gemäß einer weiteren bevorzugten Weiterbildung ist vorgesehen, dass der Anschlusspin einen Standardpin umfasst, wobei der Kopf des Standardpins außerhalb des Sensormoduls angeordnet ist, so dass eine Implementierung des Anschlusspins aufgrund der Verwendung eines Standardbauteils besonders kostengünstig ist. Ferner umfasst der Kopf des Standardpins eine Anschlussfläche, so dass zur elektrischen Kontaktierung unmittelbar auf den Kopf des Standardpins gebondet wird.

Gemäß einer weiteren bevorzugten Weiterbildung ist vorgesehen, dass die Anschlussfläche mit einem Bonddraht elektrisch leitfähig kontaktiert ist, wobei bevorzugt der Anschlusspin eine weitere Anschlussfläche aufweist, welche mit einem weiteren Bonddraht elektrisch leitfähig kontaktiert ist, wobei die weitere Anschlussfläche besonders bevorzugt innerhalb des Sensormoduls angeordnet ist. Besonders vorteilhaft sind durch den weiteren Bonddraht im Innern des Sensormoduls elektrische, elektronische und/oder mikromechanische Bauelemente im Innern des Sensormoduls mit der weiteren Anschlussfläche im Innern des Sensormoduls elektrisch leitfähig verbunden, so dass auch durch den Bonddraht verbunden mit der Anschlussfläche die elektrischen, elektronischen und/oder mikromechanischen Bauelemente elektrisch leitfähig verbunden sind. Vorzugsweise umfasst der Bonddraht einen Dickdraht und der weitere Bonddraht einen Dünndraht und/oder ist die Anschlussfläche größer als die weitere Anschlussfläche.

Gemäß einer weiteren bevorzugten Weiterbildung ist vorgesehen, dass das Dämpfungselement ein Silikon umfasst, wobei das Silikon vorzugsweise zwischen den Halterahmen und die Grundplatte gespritzt ist. In vorteilhafter Weise fungiert das Silikon sowohl als Dämpfungselement, als auch zur stoffschlüssigen und/oder kraftschlüssigen Befestigung des Halterahmens in der Aussparung, da das Silikon vorzugsweise eine stoffschlüssige Klebeverbindung zwischen dem Halterahmen und der Grundplatte bzw. der Aussparung erzeugt und/oder da beim Befestigen des Halterahmens in der Aussparung das Silikon vorzugsweise reversibel deformiert wird, sodass die resultierende Spannkraft des Silikons eine kraftschlüssige Verbindung zwischen der Grundplatte und dem Halterahmen gegenüber einer Bewegung senkrecht zur Haupterstreckungsebene erzeugt.

Gemäß einer weiteren bevorzugten Weiterbildung ist vorgesehen, dass die elastischen Eigenschaften des Dämpfungselements von 125 Grad Celsius bis minus 30 Grad, bevorzugt bis minus 50 Grad und besonders bevorzugt bis minus 40 Grad Celsius im Wesentlichen konstant sind. Besonders vorteilhaft werden somit gute Dämpfungseigenschaften des Dämpfungselements über einen vergleichsweise großen Temperaturbereich und insbesondere auch bei vergleichsweise tiefen Temperaturen erzielt. Insbesondere weisen Dämpfungselemente aus Silikon gegenüber den im Stand der Technik genutzten Dämpfungselementen aus Kautschuk in der Temperaturbeständigkeit erhebliche Vorteile auf, da das Silikon im Vergleich zum Kautschuk bessere Dämpfungseigenschaften bei deutliche tieferen Temperaturen aufweist.

Gemäß einer weiteren bevorzugten Weiterbildung ist vorgesehen, dass die Ausdehnung der Grundplatte senkrecht zur Haupterstreckungsebene und/oder die Ausdehnung des Halterahmens senkrecht zur Haupterstreckungsebene die Ausdehnung des Sensormoduls in einer Richtung parallel zur Haupterstreckungsebene wenigstens zu 40 %, bevorzugt wenigstens zu 70% und besonders bevorzugt wenigstens zu 90% überlappt. Vorzugsweise werden somit die kraftschlüssige und/oder die stoffschlüssige Verbindungen zwischen dem Halterahmen und der Grundplatte deutlich erhöht, da eine größere Überlappungsfläche zu einer größeren Reibungskraft und/oder zu einer größeren Klebekraft zwischen dem Halterahmen und der Grundplatte führt. Ferner wird die Bauraumhöhe senkrecht zur Haupterstreckungsebene deutlich reduziert.

Gemäß einer weiteren bevorzugten Weiterbildung ist vorgesehen, dass die Sensoranordnung senkrecht zur Haupterstreckungsebene eine Gesamtausdehnung von maximal 10 mm, bevorzugt maximal 6 mm und besonders bevorzugt maximal 5,5 mm aufweist. Eine derartige Reduzierung der benötigten Bauraumhöhe senkrecht zur Haupterstreckungsebene ermöglicht in besonders vorteilhafter Weise eine einfachere, vielseitigere und kostengünstigere Implementierung der Sensoranordnung, insbesondere in ein Fahrzeug.

Gemäß einer weiteren bevorzugten Weiterbildung ist vorgesehen, dass das Sensormodul ein hermetisch dicht verschweißtes Metallgehäuse umfasst, wobei der Halterahmen bevorzugt einen Aluminiumrahmen umfasst. Vorteilhafterweise wird somit die schwingungsgedämpfte Befestigung von Sensormodulen in Standardgehäusen ermöglicht, welche insbesondere eine vergleichsweise hohe Dichtigkeit aufweisen.

Gemäß einer weiteren bevorzugten Weiterbildung ist vorgesehen, dass das Sensormodul einen Drehratensensor umfasst.

Ein weiterer Gegenstand der vorliegenden Erfindung ist ein Verfahren zur Herstellung einer Sensoranordnung, wobei in einem ersten Verfahrensschritt der Halterahmen in die Aussparung eingesetzt wird, wobei in einem zweiten Verfahrensschritt das Dämpfungselement zwischen die Aussparung und den Halterahmen gespritzt wird und wobei in einem dritten Verfahrensschritt das Sensormodul in den Halterahmen derart eingepresst wird, dass der Halterahmen zusammen mit dem Sensormodul durch das Dämpfungselement, welches ein elastisches Element umfasst, in der Aussparung kraftschlüssig gegenüber einer Bewegung senkrecht zur Haupterstreckungsebene und formschlüssig gegenüber eine Bewegung in der Haupterstreckungsebene eingeklemmt ist. Besonders vorteilhaft wird im

Vergleich zum Stand der Technik mit einer geringeren Anzahl von Herstellungsschritten eine Sensoranordnung hergestellt, so dass die Herstellung deutlich kostengünstiger ist, wobei insbesondere ein Verfahrensschritt zur stoffschlüssigen Verbindung des Halterahmens mit dem Sensormodul gänzlich eingespart wird und daher auch keine Aushärtezeiten, keine Temperaturerhöhungen zum Aushärten und/oder keine Justagezeiten benötigt werden. Ferner erzielt die kraftschlüssige Verbindung zwischen dem Sensormodul und dem Halterahmen eine mechanisch erheblich festere Verbindung, so dass die Sensoranordnung im Vergleich zum Stand der Technik deutlich stabiler ist.

Gemäß einer weiteren bevorzugten Weiterbildung ist vorgesehen, dass in einem vierten Verfahrensschritt die Anschlussfläche des wenigstens einen Anschlusspins mit einem Bonddraht elektrisch kontaktiert wird, insbesondere mit einem auf der Grundplatte angeordneten Bauelement, wobei insbesondere in einem vor dem ersten Verfahrensschritt durchgeführten fünften Verfahrensschritt eine der Anschlussfläche des Anschlusspins entlang des Anschlusspins gegenüberliegende weitere Anschlussfläche mit einem weiteren Bonddraht elektrisch kontaktiert wird und somit besonders bevorzugt mit einem elektrischen, elektronischen und/oder mikromechanischen Bauelement im Innern des Sensormoduls elektrisch leitfähig verbunden wird. In besonders vorteilhafter Weise ermöglicht die Verwendung eines Anschlusspins mit einer Anschlussfläche eine vergleichsweise einfache und kostengünstige elektrische Kontaktierung der elektrisch, elektronischen und/oder mikroelektronischen Bauelemente im Innern des Sensormoduls mittels zweier Bondprozesse, wobei die Anschlussfläche insbesondere von einem Kopf eine Standardpins gebildet wird.

Ausführungsbeispiele der vorliegenden Erfindung sind in den Zeichnungen dargestellt und in der nachfolgenden Beschreibung näher erläutert.

### Kurze Beschreibung der Zeichnungen

### Es zeigen

**Figur 1** eine schematische Seitenansicht einer Sensoranordnung gemäß einer ersten Ausführungsform der vorliegenden Erfindung,
**Figur 2** eine schematische Seitenansicht einer Sensoranordnung gemäß einer zweiten Ausführungsform der vorliegenden Erfindung,
**Figur 3** eine schematische Perspektivansicht einer Sensoranordnung gemäß einer dritten Ausführungsform der vorliegenden Erfindung,
**Figur 4** eine schematische Seitenansicht einer Sensoranordnung gemäß einer vierten Ausführungsform der vorliegenden Erfindung und
**Figur 5** eine weitere schematische Seitenansicht einer Sensoranordnung gemäß der vierten Ausführungsform der vorliegenden Erfindung.

### Ausführungsform(en) der Erfindung

In den verschiedenen Figuren sind gleiche Teile stets mit den gleichen Bezugszeichen versehen und werden daher in der Regel auch jeweils nur einmal benannt.

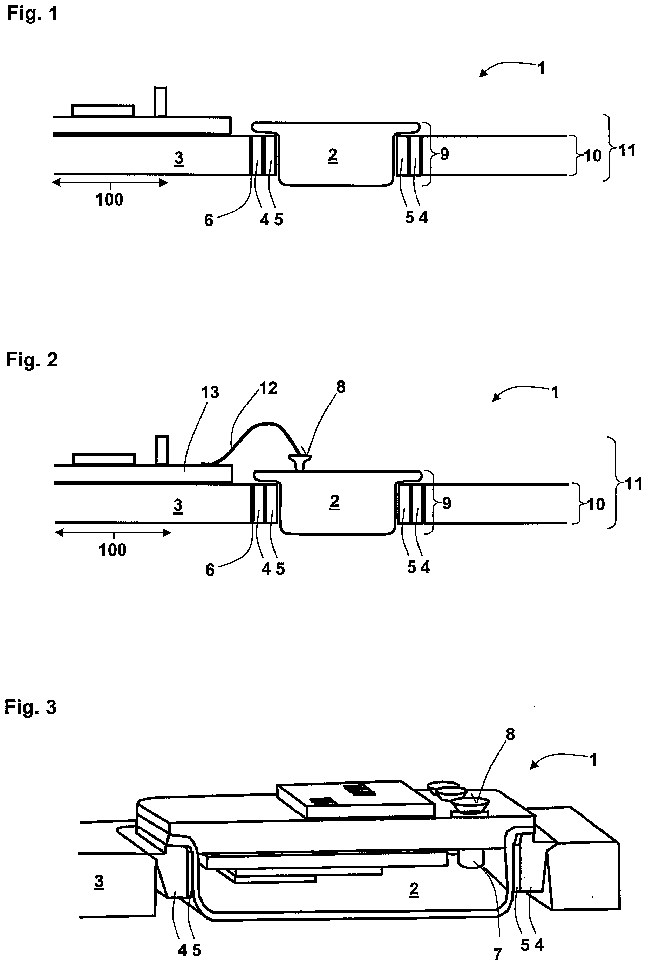

In **Figur 1** ist eine schematische Seitenansicht einer Sensoranordnung 1 gemäß einer ersten Ausführungsform der vorliegenden Erfindung dargestellt, wobei die Sensoranordnung 1 eine Grundplatte 3, ein Sensormodul 2, ein Dämpfungselement 4 und einem Halterahmen 5 aufweist, wobei die Grundplatte 3 eine Haupterstreckungsebene 100 und eine zur Haupterstreckungsebene 100 senkrechte Aussparung 6 aufweist, wobei der Halterahmen 5 in der Aussparung 6 befestigt ist und wobei zwischen dem Halterahmen 5 und der Aussparung 6 das Dämpfungselement 4 angeordnet ist und wobei ferner das Sensormodul 2 formschlüssig und kraftschlüssig in den Halterahmen 5 eingepresst ist. Die Ausdehnung 10 der Grundplatte 3 senkrecht zur Haupterstreckungsebene 100 überlappt den Großteil der Ausdehnung 9 des Sensormoduls 2 senkrecht zur Haupterstreckungsebene 100 in einer Richtung parallel zur Haupterstreckungsebene 100, so dass die Sensoranordnung 1 senkrecht zur Haupterstreckungsebene 100 eine vergleichsweise geringe Gesamtausdehnung, vorzugsweise von 4 mm aufweist.

In **Figur 2** ist eine schematische Seitenansicht einer Sensoranordnung 1 gemäß einer zweiten Ausführungsform der vorliegenden Erfindung dargestellt, wobei die zweite Ausführungsform identisch der ersten Ausführungsform illustriert in Figur 1 ist, wobei das Sensormodul 2 lediglich einen Anschlusspin 7 aufweist, welcher außerhalb des Sensormoduls 2 eine Anschlussfläche 8 aufweist, welche im Wesentlichen parallel zur Haupterstreckungsebene 100 ausgebildet ist und wobei ferner ein Bonddraht 12 die Anschlussfläche 8 elektrisch leitfähig mit einem auf der Grundplatte 3 angeordneten Bauelement 13 verbindet. Vorzugsweise wird ein Drehratensensor im Sensormodul 2 durch den wenigstens einen Anschlusspin 7 und den wenigstens einen Bonddraht 12 mit einem Hybridchip auf der Grundplatte verbunden, wobei der Hybridchip besonders bevorzugt zur Durchführung eines Sicherheitssystems, wie beispielsweise ABS oder ESP, vorgesehen ist. Der Anschlusspin 7 umfasst besonders bevorzugt einen Standardpin mit einem Kopf, wobei der Kopf des Standardpins außerhalb des Sensormoduls 2 angeordnet ist und die Anschlussfläche 8 bildet, während eine weitere Anschlussfläche des Standardpins im Innern des Sensormoduls 2 über einen weiteren Bonddraht den Sensor kontaktiert, wobei die weitere Anschlussfläche ganz besonders bevorzugt auf einer der Anschlussfläche 8 entlang des Anschlusspins 7 gegenüberliegenden Seite des Anschlusspins 7 angeordnet ist, wobei vorzugsweise der Anschlusspin 7 mittels einer Glasdurchführung am bzw. im Sensormodul 2 angeordnet ist.

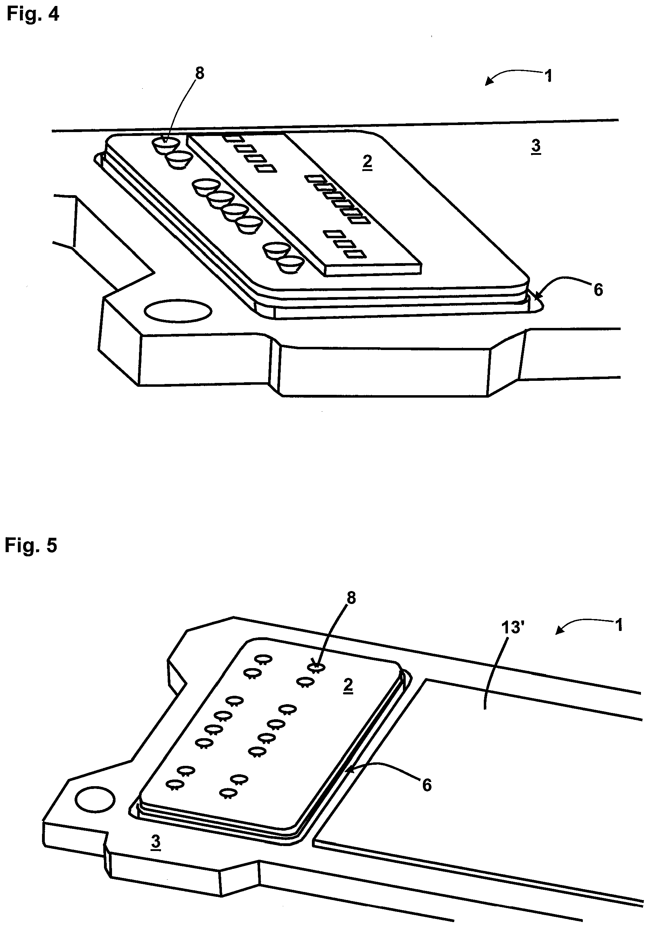

In den **Figuren 3****,** **4 und 5** sind jeweils schematische Perspektivansichten einer Sensoranordnung gemäß einer dritten und einer vierten Ausführungsform der vorliegenden Erfindung dargestellt, wobei die dritte und die vierte Ausführungsform jeweils identisch der zweiten Ausführungsform illustriert in Figur 2 ist, wobei die Bonddrähte nicht abgebildet sind und wobei ferner lediglich unterschiedliche Formen der Grundplatten und der Sensormodule dargestellt sind.

## Patentansprüche

1. Sensoranordnung (1) mit einer Grundplatte (3), einem Sensormodul (2), einem Dämpfungselement (4) und einem Halterahmen (5), wobei die Grundplatte (3) eine Haupterstreckungsebene (100) und eine zur Haupterstreckungsebene (100) senkrechte Aussparung (6) aufweist, wobei der Halterahmen (5) in der Aussparung (6) befestigt ist und wobei ferner zwischen dem Halterahmen (5) und der Aussparung (6) das Dämpfungselement (4) angeordnet ist, wobei das Sensormodul (2) formschlüssig und kraftschlüssig in den Halterahmen (5) eingepresst ist, **dadurch gekennzeichnet, dass** der Halterahmen (5) zusammen mit dem Sensormodul (2) durch das Dämpfungselement (4), welches ein elastisches Element umfasst, in der Aussparung (6) kraftschlüssig gegenüber einer Bewegung senkrecht zur Haupterstreckungsebene (100) und formschlüssig gegenüber eine Bewegung in der Haupterstreckungsebene (100) eingeklemmt ist.

2. Sensoranordnung (1) nach Anspruch 1, **dadurch gekennzeichnet, dass** das Sensormodul (2) wenigstens einen Anschlusspin (7) aufweist, welcher außerhalb des Sensormoduls (2) eine Anschlussfläche (8) aufweist, welche im Wesentlichen parallel zur Haupterstreckungsebene (100) ausgebildet ist.

3. Sensoranordnung (1) nach Anspruch 2, **dadurch gekennzeichnet, dass** der Anschlusspin (7) einen Standardpin umfasst, wobei der Kopf des Standardpins (7) außerhalb des Sensormoduls (2) angeordnet ist.

4. Sensoranordnung (1) nach Anspruch 2, **dadurch gekennzeichnet, dass** die Anschlussfläche (8) mit einem Bonddraht (12) elektrisch ieitfähig kontaktiert ist, wobei bevorzugt der Anschlusspin (7) eine weitere Anschlussfläche aufweist, welche mit einem weiteren Bonddraht elektrisch leitfähig kontaktiert ist, wobei die weitere Anschlussfläche besonders bevorzugt innerhalb des Sensormoduls (2) angeordnet ist.

5. Sensoranordnung (1) nach einem der vorhergehenden Ansprüche, **dadurch gekennzeichnet, dass** das Dämpfungselement (4) ein Silikon umfasst, wobei das Silikon vorzugsweise zwischen den Halterahmen (5) und die Grundplatte (3) gespritzt ist.

6. Sensoranordnung (1) nach einem der vorhergehenden Ansprüche, **dadurch gekennzeichnet, dass** die elastischen Eigenschaften des Dämpfungselements (4) von 125 Grad Celsius bis minus 30 Grad, bevorzugt bis minus 50 Grad und besonders bevorzugt bis minus 40 Grad Celsius im Wesentlichen konstant sind.

7. Sensoranordnung (1) nach einem der vorhergehenden Ansprüche, **dadurch gekennzeichnet, dass** die Ausdehnung (10) der Grundplatte (3) senkrecht zur Haupterstreckungsebene (100) und/oder die Ausdehnung des Halterahmens (5) senkrecht zur Haupterstreckungsebene (100) die Ausdehnung (9) des Sensormoduls (2) in einer Richtung parallel zur Haupterstreckungsebene (100) wenigstens zu 40 %, bevorzugt wenigstens zu 70% und besonders bevorzugt wenigstens zu 90% überlappt.

8. Sensoranordnung (1) nach einem der vorhergehenden Ansprüche, **dadurch gekennzeichnet, dass** die Sensoranordnung (1) senkrecht zur Haupterstreckungsebene (100) eine Gesamtausdehnung (11) von maximal 10 mm, bevorzugt maximal 6 mm und besonders bevorzugt maximal 5,5 mm aufweist.

9. Sensoranordnung (1) nach einem der vorhergehenden Ansprüche, **dadurch gekennzeichnet, dass** das Sensormodul (2) ein hermetisch dicht verschweißtes Metallgehäuse umfasst, wobei der Halterahmen (5) bevorzugt einen Aluminiumrahmen umfasst.

10. Sensoranordnung (1) nach einem der vorhergehenden Ansprüche, **dadurch gekennzeichnet, dass** das Sensormodul (2) einen Drehratensensor umfasst.

11. Verfahren zur Herstellung einer Sensoranordnung (1) nach einem der vorhergehenden Ansprüche, **dadurch gekennzeichnet, dass** in einem ersten Verfahrensschritt der Halterahmen (5) in die Aussparung (6) eingesetzt wird, wobei in einem zweiten Verfahrensschritt das Dämpfungselement (4) zwischen die Aussparung (6) und den Halterahmen (5) gespritzt wird und wobei in einem dritten Verfahrensschritt das Sensormodul (2) in den Halterahmen (5) derart eingepresst wird, dass der Halterahmen (5) zusammen mit dem Sensormodul (2) durch das Dämpfungselement (4) in der Aussparung (6) kraftschlüssig gegenüber einer Bewegung senkrecht zur Haupterstreckungsebene (100) und formschlüssig gegenüber eine Bewegung in der Haupterstreckungsebene (100) eingeklemmt ist.

12. Verfahren nach Anspruch 11, **dadurch gekennzeichnet, dass** in einem vierten Verfahrensschritt die Anschlussfläche (8) des wenigstens einen Anschlusspins (9) mit einem Bonddraht (12) elektrisch kontaktiert wird, insbesondere mit einem auf der Grundplatte (3) angeordneten Bauelement (13), wobei insbesondere in einem vor dem ersten Verfahrensschritt durchgeführten fünften Verfahrensschritt eine der Anschlussfläche (8) entlang des Anschlusspins (9) gegenüberliegende weitere Anschlussfläche mit einem weiteren Bonddraht elektrisch kontaktiert wird

## Claims

1. Sensor arrangement (1) comprising a base plate (3), a sensor module (2), a damping element (4) and a holding frame (5), wherein the base plate (3) has a plane (100) of main extent and a cutout (6) which is perpendicular to the plane (100) of main extent, wherein the holding frame (5) is fastened in the cutout (6), and wherein the damping element (4) is further arranged between the holding frame (5) and the cutout (6), wherein the sensor module (2) is pressed into the holding frame (5) in an interlocking and force-fitting manner, **characterized in that** the holding frame (5) is clamped together with the sensor module (2) by the damping element (4), which comprises an elastic element, in the cutout (6) in a force-fitting manner with respect to a movement perpendicular to the plane (100) of main extent and in an interlocking manner with respect to a movement in the plane (100) of main extent.

2. Sensor arrangement (1) according to Claim 1, **characterized in that** the sensor module (2) has at least one connection pin (7) which has a connection area (8) outside the sensor module (2), the said connection area being formed substantially parallel to the plane (100) of main extent.

3. Sensor arrangement (1) according to Claim 2, **characterized in that** the connection pin (7) comprises a standard pin, wherein the head of the standard pin (7) is arranged outside the sensor module (2).

4. Sensor arrangement (1) according to Claim 2, **characterized in that** electrically conductive contact is made with the connection area (8) by a bonding wire (12), wherein the connection pin (7) preferably has a further connection area with which electrically conductive contact is made by a further bonding wire, wherein the further connection area is particularly preferably arranged within the sensor module (2).

5. Sensor arrangement (1) according to one of the preceding claims, **characterized in that** the damping element (4) comprises a silicone, wherein the silicone is preferably injected between the holding frame (5) and the base plate (3).

6. Sensor arrangement (1) according to one of the preceding claims, **characterized in that** the elastic properties of the damping element (4) are substantially constant at from 125 degrees Celsius to minus 30 degrees, preferably to minus 50 degrees and particularly preferably to minus 40 degrees, Celsius.

7. Sensor arrangement (1) according to one of the preceding claims, **characterized in that** the extent (10) of the base plate (3) perpendicular to the plane (100) of main extent and/or the extent of the holding frame (5) perpendicular to the plane (100) of main extent overlaps the extent (9) of the sensor module (2) at least by 40%, preferably at least by 70%, particularly preferably at least by 90%, in a direction parallel to the plane (100) of main extent.

8. Sensor arrangement (1) according to one of the preceding claims, **characterized in that** the sensor arrangement (1) has a total extent (11) of at most 10 mm, preferably at most 6 mm, and particularly preferably at most 5.5 mm, perpendicular to the plane (100) of main extent.

9. Sensor arrangement (1) according to one of the preceding claims, **characterized in that** the sensor module (2) comprises a metal housing which is welded in a hermetically sealed manner, wherein the holding frame (5) preferably comprises an aluminium frame.

10. Sensor arrangement (1) according to one of the preceding claims, **characterized in that** the sensor module (2) comprises a rate of rotation sensor.

11. Method for producing a sensor arrangement (1) according to one of the preceding claims, **characterized in that** the holding frame (5) is inserted into the cutout (6) in a first method step, wherein the damping element (4) is injected between the cutout (6) and the holding frame (5) in a second method step, and wherein the sensor module (2) is pressed into the holding frame (5) in a third method step in such a way that the holding frame (5) is clamped together with the sensor module (2) by the damping element (4) in the cutout (6) in a force-fitting manner with respect to a movement perpendicular to the plane (100) of main extent and in an interlocking manner with respect to a movement in the plane (100) of main extent.

12. Method according to Claim 11, **characterized in that** electrical contact is made with the connection area (8) of the at least one connection pin (9) by a bonding wire (12), in particular by a component (13) which is arranged on the base plate (3), in a fourth method step, wherein electrical contact is made with a further connection area, which is situated opposite the connection area (8) along the connection pin (9), by a further bonding wire in particular in a fifth method step which is carried out before the first method step.

## Revendications

1. Système de détection (1) comportant un socle (3), un module de détection (2), un élément d'amortissement (4) et un cadre de support (5), dans lequel le socle (3) comporte un plan d'extension principal (100) et un évidement (6) perpendiculaire au plan d'extension principal (100), dans lequel le cadre de support (5) est fixé dans l'évidement (6), et dans lequel l'élément d'amortissement (4) est en outre disposé entre le cadre de support (5) et l'évidement (6), dans lequel le module de détection (2) est emmanché par complémentarité de forme et par complémentarité de force dans le cadre de support (5), **caractérisé en ce que** le cadre de support (5), en association avec le module de détection (2), est bloqué dans l'évidement (6) par l'élément d'amortissement (4), qui comprend un élément élastique, par complémentarité de force contre un mouvement perpendiculaire au plan d'extension principal (100) et par complémentarité de forme contre un mouvement dans le plan d'extension principal (100).

2. Système de détection (1) selon la revendication 1, **caractérisé en ce que** le module de détection (2) comporte au moins une broche de raccordement (7), qui comporte à l'extérieur du module de détection (2) une plage de contact (8) réalisée de manière sensiblement parallèle au plan d'extension principal (100).

3. Système de détection (1) selon la revendication 2, **caractérisé en ce que** la broche de raccordement (7) comprend une broche standard, dans lequel la tête de la broche standard (7) est disposée à l'extérieur du module de détection (2).

4. Système de détection (1) selon la revendication 2, **caractérisé en ce que** la plage de contact (8) est mise en contact électriquement conducteur avec un fil de connexion (12), dans lequel la broche de raccordement (7) comporte de préférence une autre plage de contact qui est mise en contact électriquement conducteur avec un autre fil de connexion, dans lequel l'autre plage de contact est de manière particulièrement préférée disposée à l'intérieur du module de détection (2).

5. Système de détection (1) selon l'une quelconque des revendications précédentes, **caractérisé en ce que** l'élément d'amortissement (4) comprend une silicone, dans lequel la silicone est de préférence injectée entre le cadre de support (5) et le socle (3).

6. Système de détection (1) selon l'une quelconque des revendications précédentes, **caractérisé en ce que** les propriétés élastiques de l'élément d'amortissement (4) sont sensiblement constantes de 125 degrés Celsius jusqu'à moins 30 degrés, de préférence jusqu'à moins 50 degrés et de manière particulièrement préférée jusqu'à moins 40 degrés Celsius.

7. Système de détection (1) selon l'une quelconque des revendications précédentes, **caractérisé en ce que** l'étendue (10) du socle (3) perpendiculairement au plan d'extension principal (100) et/ou l'étendue du cadre de support (5) perpendiculairement au plan d'extension principal (100) recouvre l'étendue (9) du module de détection (2) dans une direction parallèle au plan d'extension principal (100) à au moins 40%, de préférence à au moins 70% et de manière particulièrement préférée à au moins 90%.

8. Système de détection (1) selon l'une quelconque des revendications précédentes, **caractérisé en ce que** le système de détection (1) présente perpendiculairement au plan d'extension principal (100) une étendue totale (11) d'au plus 10 mm, de préférence d'au plus 6 mm et de manière particulièrement préférée, d'au plus 5,5 mm.

9. Système de détection (1) selon l'une quelconque des revendications précédentes, **caractérisé en ce que** le module de détection (2) comprend un boîtier métallique soudé de manière hermétiquement étanche, dans lequel le cadre de support (5) comprend de préférence un cadre en aluminium.

10. Système de détection (1) selon l'une quelconque des revendications précédentes, **caractérisé en ce que** le module de détection (2) comprend un capteur de vitesse de rotation.

11. Procédé de fabrication d'un système de détection (1) selon l'une quelconque des revendications précédentes, **caractérisé en ce que**, lors d'un première étape de procédé, le cadre de support (5) est placé dans l'évidement (6), dans lequel, lors d'une deuxième étape de procédé, l'élément d'amortissement (4) est injecté entre l'évidement (6) et le cadre de support (5) et dans lequel, lors d'une troisième étape de procédé, le module de détection (2) est emmanché dans le cadre de support (5) de manière à ce que le cadre de support (5), en association avec le module de détection (2), soit bloqué par l'élément d'amortissement (4) dans l'évidement (6) par complémentarité de force contre un mouvement perpendiculaire au plan d'extension principal (100) et par complémentarité de forme contre un mouvement dans le plan d'extension principal (100).

12. Procédé selon la revendication 11, **caractérisé en ce que**, lors d'une quatrième étape de procédé, la plage de contact (8) de l'au moins une broche de raccordement (9) est mise en contact électrique avec un fil de connexion (12), notamment avec un composant (13) disposé sur le socle (3), dans lequel, notamment lors d'une cinquième étape de procédé effectuée avant la première étape de procédé, une autre plage de contact opposée à la plage de contact (8) le long de la broche de raccordement (9) est mise en contact électrique avec un autre fil de connexion.
